(19) Europäisches Patentamt
European Patent Office
Office européen des brevets

(11) Publication number: **0 037 383 B1**

(12) **EUROPEAN PATENT SPECIFICATION**

(45) Date of publication of patent specification: **14.11.84**

(51) Int. Cl.[3]: **C 08 L 77/00** // (C08L77/00, C08K5/53)

(21) Application number: **81850013.4**

(22) Date of filing: **23.01.81**

(54) **Tris-(3-hydroxyalkyl) phosphine oxide flame retardant compositions.**

(30) Priority: **28.01.80 US 116335**
**28.01.80 US 116334**

(43) Date of publication of application:
**07.10.81 Bulletin 81/40**

(45) Publication of the grant of the patent:
**14.11.84 Bulletin 84/46**

(84) Designated Contracting States:
**BE CH DE FR GB IT LI NL SE**

(56) References cited:
**US-A-3 895 074**
**US-A-4 064 104**

**CHEMICAL ABSTRACTS, vol. 80, no. 10, 11th March 1974, page 26, no. 48738a Columbus, Ohio, U.S.A.**
**CHEMICAL ABSTRACTS, vol. 84, 1976, pages 75-76, no. 846377j Columbus, Ohio, U.S.A.**
**CHEMICAL ABSTRACTS, vol. 74, 1971, page 43, no. 65013d Columbus, Ohio, U.S.A.**

(73) Proprietor: **FMC Corporation**
**2000 Market Street**
**Philadelphia Pennsylvania 19103 (US)**

(72) Inventor: **Braksmayer, Diza Pearl**
**43-13 Hunters Glen Drive**
**Plainsboro New Jersey 08536 (US)**
Inventor: **Hussain, Syed Nifasat**
**17 Guest House**
**Ispahani Colony Dacca (BD)**

(74) Representative: **Halldin, Bo et al**
**Dr. Ludwig Brann Patentbyra AB Kungsgatan 3**
**P.O. Box 7524**
**S-103 92 Stockholm (SE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to thermoplastic polyamide polymers which are rendered flame retardant by having combined therewith an effective amount of a tris-(3-hydroxyalkyl) phosphine oxide.

The polyamide nylon 6/6 was one of the first engineering thermoplastics, so called because of its highly rated mechanical, thermal, and electrical properties to which standard metal design methodology could be applied to yield parts having predictable short and long-term performance characteristics. Since 1955 other polyamides, i.e., nylon 6, 6/6, 6/10, 6/12, 6/9, 11, 12 and copolymers like 6/66 have been introduced. However, nylon 6/6 and 6 have always dominated the polyamide market and account for the majority of nylons used as engineering thermoplastics.

With the current and future federal requirements obligating automative manufacturers to improve the efficiency of their product and reduce fuel consumption, there is a substantial growth in the use of engineering plastics as a replacement for metal to achieve weight reduction. At the present time, nylon is the dominant engineering thermoplastics for transportation end uses.

Polyamides such as thermoplastic nylons, are in general, characterized as being relatively stable thermally upon long exposure to processing temperatures and shear. Upon exposure to flame, however, they burn quite readily. The flammability is characterized by dripping behavior of the burning nylons. There is a substantial and increasing demand for flame retardant nylon.

To meet flame retardant requirements, nylon is customarily compounded with flame retardant additives, i.e., organic halogen compounds plus antimony oxide; the most often used combination being 17—20% of a polychloro bicyclic hydrocarbon plus 5% antimony troixide. Sometimes iron oxide is used with the organohalogen compound. Red phosphorus has also been used as a flame retardant for nylon. Such additives, however, frequently degrade or cause degradation under processing conditions (extrusion at about 250°C) resulting in poor mechanical performance of the thermoplastic nylons themselves.

The known flame retardants for nylon such as haloalkyl phosphates, suffer generally from one or more deficiencies including low compatibility, low thermal stability or poor fire retardant behavior in molded nylon components. Additionally, a serious problem posed by organohalogen flame retardants in nylon is attributable to acid formation, either due to or arising from light exposure or thermal degradation with the released acid then attacking metal components in end-use applications. Some organohalogen compounds are contraindicated as fire retardant additives due to toxicity problems of the compound, i.e., mutagenicity.

In accordance with the present invention the addition of a small but effective amount of one or more tris-(3-hydroxyalkyl) phosphine oxide having the formula:

$$\begin{array}{ccc} R_1\ R_2\ R_3 & O & \\ |\quad|\quad| & \| & \\ (HOCHCHCH)_n & P & (CH_2CH_2CH_2OH)_{3-n} \end{array}$$

wherein $R_1$, $R_2$ and $R_3$ are any radical selected from the group consisting of hydrogen, phenyl and alkyl radicals of 1 to 4 carbon atoms and n may be 1, 2, or 3, to a thermoplastic polyamide substantially improves the flame retardant properties of the polyamide. The addition of a tris-(3-hydroxyalkyl) phosphine oxide to the polyamide in the amount required to improve flame retardant properties does not adversely modify the physical properties of the polyamide to a point where its commercial use is impaired. The tris-(3-hydroxyalkyl) phosphine oxides described above are readily compatible with the polyamide and effective when added in small quantities, i.e., 10—25 parts per hundred. Particularly preferred compositions are flame retardant nylon molding resins to which have been added from 14 to 21 parts per hundred of a tris-(3-hydroxyalkyl) phosphine oxide.

The flame resistant polyamide-tris-(3-hydroxyalkyl) phosphine oxide blends of the present invention are particularly advantageous for use in the internal circuitry of appliances, business machines, terminal strips, connectors and blocks.

The tris-(3-hydroxyalkyl) phosphine oxides of the present invention are more soluble in water than in polar organic solvents such as chloroform. Such tris-(3-hydroxyalkyl) phosphine oxides combine high compatibility in polyamides with high thermal stability and excellent fire retardent efficiency either alone or in combination with organohalogen products.

The addition of a tris-(3-hydroxyalkyl) phosphine oxide to polyamide such as the various polyamides referred to above, improves mixing parameters and reduces polymer degradation by lowering the processing temperature of the polyamide. Although the present invention is not to be limited by any theoretical assumption, it is believed that one possible mechanism by which tris-(3-hydroxyalkyl) phosphine oxide imparts flame resistance is by reaction of the hydroxyl groups upon pyrolysis with the amide linkages in the polymer chain to yield a very tough crosslinked foamed and thermally insulating char, which suppresses further resin pyrolysis at the flame front and also eliminates the dripping behavior of the polymer under combustion conditions. The merits that may be attributed to such tris-(3-hydroxyalkyl) phosphine oxide flame retardant (relative to conventional flame retardant agents in

present use) include no corrosion, high ultraviolet stability, non-toxicity and minimal adverse change in the physical properties of the polymer.

In addition to providing fire resistance to molded polyamide parts, the tris-(3-hydroxyalkyl) phosphine oxides may also be present in nylon fibers making them flame retardant, more resistant to dirt and static build up and rendering the fibers less hydrophobic, thereby improving the wearability. Flame retardant treatments for conventional nylon fabrics are seldom used in practice suggesting the lack of effective treatments for nylon fabrics. The addition of tris-(3-hydroxyalkyl) phosphine oxides to nylon to be used in the manufacture of floor covers is particularly advantageous.

Tris-(3-hydroxyalkyl) phosphine oxide may be prepared by first reacting a 3-hydroxy-1,2-unsaturated olefin such as 1-butene-3-ol or 2-butene-3-ol with phosphine in the presence of a free radical catalyst as described in United States Patent No. 3,489,811. We have discovered that the use of stoichiometric quantities of reactants (or as little as 4% excess alcohol) reduce the formation of higher molecular weight by-products. The tris-(3-hydroxyalkyl) phosphine obtained by this process is readily converted to the corresponding phosphine oxide by oxidation with hydrogen peroxide.

Phosphine oxides having different 3-hydroxyalkyl groups on the phosphorus atom such as:

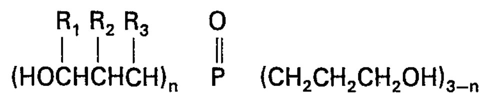

wherein $R_1$, $R_2$ and $R_3$ are any radical selected from the group consisting of hydrogen, phenyl and alkyl radicals of 1 to 4 carbon atoms and n is either 1, 2, or 3, may be prepared by reacting phosphine with a mixture of allyl alcohol and an alcohol having the formula:

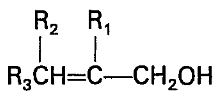

wherein $R_1$, $R_2$ and $R_3$ are any radical selected from the group consisting of hydrogen, phenyl and alkyl radicals of 1 to 4 carbon atoms and oxidizing the resulting product. These mixed phosphine oxides as well as physical mixtures of such mixed phosphine oxides with tris-hydroxyalkyl phosphine oxides such as tris-(3-hydroxypropyl) phosphine oxide and/or tris-(3-hydroxy-2-methylpropyl) phosphine oxide are useful additives having application in the present invention. Particularly preferred alcohols are allyl alcohol and methallyl alcohol.

When a mixture of allyl alcohol and methallyl alcohol are reacted with phosphine and the resulting product oxidized such mixed phosphine oxides are more volatile than the tris-(3-hydroxypropyl) phosphine oxide. The relative volatility of this series of compounds (are of vaporization by thermogravimetric technique) in order to increasing volatility of tris-(3-hydroxypropyl) phosphine oxide, bis-(3-hydroxypropyl) 2-methyl-3-hydroxypropyl phosphine oxide, tris-(2-methyl-3-hydroxypropyl) phosphine oxide and 3-hydroxypropyl bis-(2-methyl-3-hydroxypropyl) phosphine oxide. These mixed phosphine oxides as well as physical mixtures of such mixed phosphine oxides with tris-(3-hydroxypropyl) phosphine oxide and/or tris-(2-methylpropyl) phosphine oxide are useful additives having application in the present invention.

As indicated above, the less common hydroxy-olefins may be reacted with phosphine to form a 3-hydroxyalkyl phosphine that may be oxidized to the corresponding phosphine oxide. Examples are 2-butene-1-ol, 1-butene-3-ol, 2-heptene-1-ol, cinnamyl alcohol, 2-butyl 2-propene-1-ol butene-2-diol-(1,4) and 2-hydroxymethylpropene-1-ol-3. The resulting products, are more costly to manufacture and have the disadvantage of containing less phosphorus than the preferred additives of the present invention.

The following examples will more fully illustrate the invention.

Example 1

Preparation of tris-(3-hydroxypropyl) phosphine oxide

Tris-(3-hydroxypropyl) phosphine is prepared by the method described in Example 1 of US—Patent No. 3,489,811.

Into a one liter pressure reactor is placed 307 g (5.3 moles) allyl alcohol and 20 ml of a solution containing 3 g azobisisobutyronitrile dissolved in 100 ml of allyl alcohol. The pressure reactor is closed and charged with 36 g (1.06 moles) of phosphine. The reaction mixture is agitated by rocking the reactor for two hours at 80°C. The reaction mixture is permitted to cool to room temperature and the pressure vessel is vented in a hood to release any unreacted phosphine. An additional 20 ml of the azobisisobutyronitrile solution described above is added to the reactor which is closed and the system is again heated to 80°C and rocked for one hour. The addition of 20 ml of the azobisisobutyronitrile solution is repeated with intermediate agitation at 80°C for one hour under pressure until all of the azobisisobutyronitrile solution (100 ml) has been added. The contents of the reactor are then heated to 80°C under pressure and rocked for an additional five hours.

The yellow solution that results from the above reaction is vacuum distilled by heating to about 85°C/1 mm Hg and maintaining at that temperature and pressure for about four hours to remove volatiles [mono-, and bis-(3-hydroxypropyl) phosphine] and unreacted allyl alcohol. The residue remaining in the distillation pot is a clear yellow syrup weighing 184 g.

This non-volatile yellow syrup is dissolved in an equal volume of a 50:50 mixture of isopropanol/methanol and oxidized by stirring with the dropwise addition of a 30% aqueous hydrogen peroxide solution diluted with an equal volume of isopropanol. When the exothermic reaction subsides, the solution of phosphine oxide is tested by adding one drop of the solution to 1 ml of carbon disulfide until no red coloration can be detected visually in the carbon disulfide layer. This indicates complete oxidation of the phosphine to tris-(3-hydroxypropyl) phosphine oxide.

Following oxidation with hydrogen peroxide, the solvents (water, isopropanol and methanol) are removed from the reaction product by heating to 65°C under vacuum. The viscous yellow slush which remains is filtered through a Buchner Funnel to collect 42.4 grams of a white solid that is insoluble in isopropanol at room temperature. The yield, based on the phosphine used is 17.8%. After washing with isopropanol and air drying, the white solid analyzes for tris-(3-hydroxypropyl) phosphine oxide.

| Found | Theory |
|---|---|
| C=48.29% | C=48.21% |
| H=9.28% | H=9.38% |
| P=13.3% | P=13.84% |

The tris-(3-hydroxypropyl) phosphine oxide is evaluated as a fire retardant in nylon polymers (UL 94 Vertical Burn Test). The results are reported in Table I.

Example 2

Preparation of tris-(3-hydroxypropyl) phosphine oxide

Example 1 above is repeated using a smaller amount of allyl alcohol (4.1% excess). Four hundred and fifty grams (13.23 moles) phosphine is reacted with 2,400 g (41.33 moles) of allyl alcohol in the presence of 30 g azobisisobutyronitrile over a period of nine hours. The temperature varies over a range of 25°C—170°C and the pressure over a range of 600 psig to 60 psig. The reaction product is heated to 170°C at 10 mm Hg pressure to remove volatiles and the residue is oxidized with hydrogen peroxide (11.90 moles) over two hours at a temperature up to 104°C. The solvents are removed by heating to 65°C under vacuum. The residue (2,737 g, 92.25% yield) solidifies at room temperature to form an off white solid. This product analyzes for tris-(3-hydroxypropyl) phosphine oxide.

| Found | Theory |
|---|---|
| C=48.41% | C=48.2% |
| H=9.28% | H=9.38% |
| P=13.3% | P=13.84% |

Example 3

Preparation of tris-(3-hydroxy-2-methylpropyl) phosphine oxide

Tris-(3-hydrxy-2-methylpropyl) phosphine is prepared by the method described in Example 1 above.

Into a four liter pressure reactor equipped with a stirrer and thermometer is placed 690 g (9.6 moles) of methallyl alcohol and 40 ml of a solution containing 9 g azobisisobutyronitrile dissolved in 900 ml of toluene. The pressure reactor is closed and charged with 96 g (2.8 moles) of phosphine. The reaction mixture is heated with sitrring to 60°C at which temperature the reaction becomes exothermic and the temperature rises to 107°C. Stirring is continued as the temperature subsides from 107°C to 90°C and the pressure drops from 100 psig to 50 psig. The temperature is maintained at 90°C with heating and stirring for one hour at which time 50 ml of the azobisisobutyronitrile solution in toluene is pumped into the reactor. The reaction mixture is maintained at 90°C for one hour with stirring after the second addition of catalyst. The addition of 50 ml of the azobisisobutyronitrile solution is repeated with continuous stirring at 90°C each hour until all of the azobisisobutyronitrile solution (200 moles) has been added. The contents of the reactor are then stirred while maintaining the temperature at 90°C for an additional four hours. After the last addition of catalyst solution, the pressure in the reaction vessel has dropped to 0 psig.

The reaction mixture is cooled to room temperature, removed from the reaction vessel and heated

up to 35°C at 2 mm Hg to distill off the volatile components (toluene, methallyl alcohol, mono-, and bis- addition products).

The non-volatile colorless liquid residue tris-(3-hydroxy-2-methylpropyl) phosphine weighs 614.7 g. It is dissolved in an equal volume of isopropanol and chilled on ice. The phosphine present in solution is oxidized by the dropwise addition with stirring of a 30% aqueous hydrogen peroxide solution diluted with an equal volume of isopropanol. Inasmuch as the oxidation reaction is exothermic, the course of the reaction may be followed by the temperature increase upon addition of hydrogen peroxide. When the exotherm subsides, a small aliquot of the reaction mixture is tested after each addition of hydrogen peroxide with hydrogen peroxide test paper and by addition of a few drops of the reaction mixture to 1 cc of carbon disulfide. At the end of the oxidation reaction, the observed red color of the carbon disulfide indicative of unoxidized phosphine, disappears and the hydrogen peroxide test paper indicates the presence of hydrogen peroxide.

When the oxidation of the phosphine to phosphine oxide has been completed, the water and isopropanol are removed from the phosphine oxide by heating to 65°C at 2 mm Hg until all volatiles have distilled off. The residue, a clear colorless viscous liquid, weighs 633.5 g and has the following analyses:

| Found | Theory |
|---|---|
| C=54.59% | C=54.14% |
| H=9.35% | H=10.15% |
| P=11.1% | P=11.65% |

The "theory" value is calculated for tris-(3-hydroxy-2-methylpropyl) phosphine oxide.

This compound is effective in improving the flame retardance of nylon.

Example 4

Effect of tris-(3-hydroxyalkyl) phosphine oxides as a flame retardant for polyamide resins

Phosphine oxides are added to individual samples of a nylon resin in the amounts per hundred parts of resin (PHR) indicated in Table I and dispersed throughout the resin. Mixing of the additive and resin is accomplished in a Brabender type mixer (Haake Rheomix Model 600 with Reocord EU10 attachment, manufactured by Haake Inc., 244 Saddle River Road, Saddle Brook, New Jersey 07662). The mixing takes place at 265°C at which temperature some of the additive is volatilized. The Underwriter Laboratories rating (Vertical Burn Test) for the various combinations tested is indicated in Table I.

In testing the polyamide polymer compositions containing a flame retardant additive, the flame retardant properties are determined following procedures established by the Underwriter Laboratories Bulletin No. 94, Standard for Tests for Flammability of Plastic Materials for Parts in Devices and Appliances; Second Edition, Second Impression (as revised to February 1, 1974) dated July 30, 1976. The Vertical Burning Test for classifying Materials 94 V-0 94 V-1 or 94 V-2 and described in Section 3 of this publication is used. In this test, the V-0 rating indicates the best flame resistance and the V-2 rating indicates the poorest flame resistance. Test results are in the table.

Example 5

Preparation of tris-(3-methyl-3-hydroxypropyl) phosphine oxide

Into a one liter pressure reactor is placed 381.6 g (5.3 moles) 1-butene-3-ol and 20 ml of a solution containing 3 g azobisisobutyronitrile dissolved in 100 ml of 1-butene-3-ol. The pressure reactor is closed and charged with 36 g (1.06 moles) of phosphine. The reaction mixture is agitated by rocking the reactor for two hours at 80°C. The reaction mixture is permitted to cool to room temperature and the pressure vessel is vented in a hood to release any unreacted phosphine. An additional 20 ml of the azobisisobutyronitrile solution described above is added to the reactor which is closed and the system is again heated to 80°C and rocked for one hour. The addition of 20 ml of the azobisisobutyronitrile solution is repeated with the intermediate agitation at 80°C for one hour under pressure until all of the azobisisobutronitrile solution (100 ml) has been added. The contents of the reactor are then heated to 80°C under pressure and rocked for an additional five hours.

The solution that results from the above reaction may be vacuum distilled by heating to about 85°C/1 mm Hg and maintaining at that temperature and pressure for about four hours to remove volatiles.

The non-volatile residue may be dissolved in an equal volume of a 50:50 mixture of isopropanol/-methanol and oxidized by stirring with the dropwise addition of a 30% aqueous hydrogen peroxide solution diluted with an equal volume of isopropanol. When the exothermic reaction subsides, the solution of phosphine oxide is tested by adding one drop of the solution to 1 ml of carbon disulfide until no

red coloration can be detected visually in the carbon disulfide layer. This indicates complete oxidation of the phosphine to the phosphine oxide.

Following oxidation with hydrogen peroxide, the solvents (water, isopropanol and methanol) are removed from the reaction product by heating to 65°C under vacuum. The product which remains, tris-(3-methyl-3-hydroxypropyl) phosphine oxide is a useful fire retardant additive for polyamide resins.

Example 6

Preparation of tris-(1-methyl-3-hydroxypropyl) phosphine oxide

Example 5 above may be repeated using a stoichiometric amount of 2-butene-1-ol (crotyl alcohol). Four hundred and fifty grams (13.23 moles) phosphine may be reacted with 2,858 g (39.69 moles) of 2-butene-1-ol in the presence of 30 g azobisisobutyronitrile over a period of nine hours. The temperature varies over a range of 25°C—170°C and the pressure over a range of 600 psig to 60 psig. Heating the reaction product to 170°C at 10 mm Hg pressure will remove volatiles and the residue may be oxidized with hydrogen peroxide (11.90 moles) over two hours at a temperature up to 104°C. The solvents may be removed by heating to 65°C under vacuum. The residue is a useful fire retardant for nylon.

Example 7

Preparation of 3-hydroxypropyl bis-(1-methyl-3-hydroxypropyl) phosphine oxide

3-Hydroxypropyl bis-(1-methyl-3-hydroxypropyl) phosphine may be prepared by the method described in Example 1 above.

Into a four liter pressure reactor equipped with a stirrer and thermometer is placed 162.4 g (2.8 moles) of allyl alcohol, 403.2 g (5.6 moles) 2-butene-1-ol and 40 ml of a solution containing 9 g azobisisobutyronitrile dissolved in 900 ml of toluene. The pressure reactor is closed and charged with 96 g (2.8 moles) of phosphine. The reaction mixture is heated with stirring to 60°C at which temperature the reaction becomes exothermic and the temperature rises. Stirring is continued and the temperature is maintained at 90°C with heating and stirring for one hour at which time 50 ml of the azobisisobutyronitrile solution in toluene is pumped into the reactor. The reaction mixture is maintained at 90°C for one hour with stirring after the second addition of catalyst. The addition of 50 ml of the azobisisobutyronitrile solution is repeated with continuous stirring at 90°C each hour until all of the azobisisobutyronitrile solution (200 moles) has been added. The contents of the reactor are then stirred while maintaining the temperature at 90°C for an additional four hours after the pressure in the reaction vessel has dropped to 0 psig.

The reaction mixture may be cooled to room temperature, removed from the reaction vessel and heated up to 35°C at 2 mm Hg to distill off the volatile components.

The non-volatile residue may be dissolved in an equal volume of isopropanol and chilled on ice. The phosphine present in solution is oxidized by the dropwise addition with stirring of a 30% aqueous hydrogen peroxide solution diluted with an equal volume of isopropanol. Inasmuch as the oxidation reaction is exothermic, the course of the reaction may be followed by the temperature increase upon addition of hydrogen peroxide. When the exotherm subsides, a small aliquot of the reaction mixture is tested after each addition of hydrogen peroxide with hydrogen peroxide test paper and by addition of few drops of the reaction mixture to 1 cc of carbon disulfide. At the end of the oxidation reaction, the observed red color of the carbon disulfide indicative of unoxidized phosphine, disappears and the hydrogen peroxide test paper indicates the presence of hydrogen peroxide.

When the oxidation of the phosphine to phosphine oxide has been completed, the water and isopropanol are removed from the phosphine oxide by heating to 65°C at 2 mm Hg until all volatiles have distilled off. The residue is a useful fire retardant additive for nylon resins.

In a similar manner, 1-methyl-3-hydroxypropyl bis-(3-hydroxypropyl) phosphine oxide may be prepared by reacting 2 moles of allyl alcohol and 1 mole of 2-butene-1-ol with 1 mole of phosphine and oxidizing the reaction product.

Example 8

Effect of tris-(3-hydroxyalkyl) phosphine oxides as a flame retardant for polyamide resins

Each of the phosphine oxides described above in Examples 5, 6 and 7 are added to individual samples of a nylon resin in amounts of 20 parts per hundred parts of resin (PHR) and dispersed throughout the resin. Mixing of the additive and resin may be accomplished in a Brabender type mixer (Haake Rheomix Model 600 with Reocord EU10 attachment, manufactured by Haake Inc., 244 Saddle River Road, Saddle Brook, New Jersey 07662). The mixing can take place at 265°C at which temperature some of the additive is volatilized.

In testing the polyamide polymer compositions containing a flame retardant additive, the flame retardant properties are determined following procedures established by the Underwriter Laboratories Bulletin No. 94, Standard for Tests for Flammability of Plastic Materials for Parts in Devices and Appliances; Second Edition, Second Impression (as revised to February 1, 1974) dated July 30, 1976. The Vertical Burning Test for classifying Materials 94 V-0, 94 V-1 or 94 V-2 and described in Section 3 of this publication is used. The phosphine oxides described in Examples 5, 6 and 7 when added to polyamide resins in amounts of 20 parts per hundred provide products that are classified V0 or V1 by the Vertical Burn Test described above.

TABLE

A. Test results on nylon 66—30% glass filled

| Phosphine oxide added | PHR[1] | UL94[4] | Remarks |
|---|---|---|---|
| None | — | — | Complete burn |
| Trioctyl | 21 | V2 | No char molds with difficulty |
| Sec-butyl bis-(3-hydroxypropyl) | 21 | V2 | Flammable dripping |
| Tris-(3-hydroxypropyl) | 21 | V0 | Thick char, 2.4 seconds[3] |
| Tris-(3-hydroxypropyl) | 18 | V1 | |
| Tris-(2-cyanoethyl) | 21 | V1—V2 | Flammable dripping |
| Tris-(2-hydroxypropyl) | 21 | V2 | No char |
| 10 PHR tris-(3-hydroxy-propyl)+11 PHR FR300[2] | | V0 | Thick char 1.3 seconds[3] |

1. Parts of additive per 100 parts of nylon (some of this additive may be volatilized during mixing)
2. Decabromo-diphenyl oxide
3. Average burn time
4. Tests run on 1/8 inch specimens

TABLE (Continued)

B. Test results on nylon 6—30% glass filled

| Additive | UL94[4] | Remarks |
|---|---|---|
| None | — | Complete burn |
| 17.75 PHR FR300[2]+ 6.25 PHR $Sb_2O_3$ | V2 | |
| 10.6 PHR tris-(3-hydrdoxy-propyl) phosphine oxide+ 13.4 PHR FR300[2] | V1 | 13.5 seconds[3] |

1. Parts of additive per 100 parts of nylon (some of this additive may be volatilized during mixing)
2. Decabromo-diphenyl oxide
3. Average burn time
4. Tests run on 1/8 inch specimens

**Claims**

1. A flame retardant thermoplastic polyamide polymer characterized by having the polyamide polymer combined with 5—25 parts per hundred parts of the polymer of one or more tris(3-hydroxyalkyl) phosphine oxides having the formula:

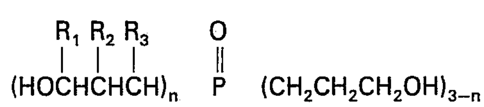

wherein $R_1$, $R_2$ and $R_3$ are any radical selected from the group consisting of hydrogen, phenyl and alkyl radicals of 1 to 4 carbon atoms and n may be 1, 2 or 3.

2. The flame retardant polymer of claim 1 wherein the phosphine oxide is selected from tris-(3-hydroxypropyl) phosphine oxide, tris-(2-methyl-3-hydroxypropyl) phosphine oxide, 3-hydroxypropyl bis-(2-methyl-3-hydroxypropyl) phosphine oxide, 2-methyl-3-hydroxypropyl bis-(3-hydroxy-popyl) phosphine oxide, a mixture of 3-hydroxypropyl bis-(2-methyl-3-hydroxypropyl) phosphine oxide and bis-(3-hydroxypropyl) 2-methyl-3-hydroxypropyl phosphine oxide, tris-(1-methyl-3-hydroxypropyl) phosphine oxide, tris-(1-phenyl-3-hydroxypropyl) phosphine oxide, 3-hydroxypropyl bis-(1-methyl-3-hydroxypropyl) phosphine oxide, 1-methyl-3-hydroxypropyl bis-(3-hydroxypropyl) phosphine oxide and a

mixture of 3-hydroxypropyl bis-(1-methyl-3-hydroxypropyl) phosphine oxide and bis-(3-hydroxypropyl) 1-methyl-3-hydroxypropyl phosphine oxide.

3. The flame retardant polymer of claim 1 or 2 wherein said thermoplastic polyamide is nylon 66 or nylon 6.

4. The flame retardant polymer of claim 1 to which has been added 14—21 parts per hundred of said phosphine oxide.

5. A method of manufacturing the flame retardant polyamide polymer of claims 1 to 4 which comprises adding the phosphine oxide to the polymer and distributing it throughout.

## Revendications

1. Un polymère thermoplastique résistant au feu à base de polyamide, caractérisé en ce que le polymère de polyamide est combiné avec 5 à 25 parties pour 100 parties du polymère d'un ou de plusieurs tri(3-hydroxyalkyl) phosphineoxydes répondant à la formule:

$$(\mathrm{HO\overset{R_1}{\overset{|}{C}}H\overset{R_2}{\overset{|}{C}}H\overset{R_3}{\overset{|}{C}}H})_n\!-\!\overset{O}{\overset{\|}{P}}\!-\!(CH_2CH_2CH_2OH)_{3-n}$$

dans laquelle $R_1$, $R_2$ et $R_3$ sont un radical choisi dans le groupe composé de l'hydrogène, des radicaux phényle et alkyles renfermant 1 à 4 atomes de carbone et n peut être 1, 2 ou 3.

2. Polymère résistant au feu selon la revendication 1, caractérisé en ce que l'oxyde de phosphine est choisi parmi l'oxyde de tri-(3-hydroxypropyl) phosphine, l'oxyde de tri-(2-méthyl-3-hydroxypropyl) phosphine, l'oxyde de 3-hydroxypropyl bis-(2-méthyl-3-hydroxypropyl) phosphine, l'oxyde de 2-méthyl-3-hydroxypropyl bis-(3-hydroxypropyl) phosphine, un mélange d'oxyde de 3-hydroxypropyl bis-(2-méthyl-3-hydroxypropyl) phosphine et d'oxyde de bis-(3-hydroxypropyl) 2-méthyl-3-hydroxypropyl phosphine, l'oxyde de tris-(1-méthyl-3-hydroxypropyl) phosphine, l'oxyde de tris-(1-phényl-3-hydroxypropyl) phosphine, l'oxyde de 3-hydroxypropyl bis-(1-méthyl-3-hydroxypropyl) phosphine, l'oxyde de 1-méthyl-3-hydroxypropyl bis-(3-hydroxypropyl) phosphine et un mélange d'oxyde de 3-hydroxypropyl bis-(1-méthyl-3-hydroxypropyl) phosphine et d'oxyde de bis-(3-hydroxypropyl) 1-méthyl-3-hydroxypropyl phosphine.

3. Polymère résistant au feu selon la revendication 1 ou 2, caractérisé en ce que ledit polyamide thermoplastique est le nylon 66 ou le nylon 6.

4. Polymére résistant au feu selon la revendication 1 auquel on été incorporées 14 à 21 parties pour 100 dudit oxyde de phosphine.

5. Procédé de fabrication du polymère de polyamide résistant au feu selon les revendications 1 à 4 qui consiste à ajouter l'oxyde de phosphine au polymère et à l'y répartir.

## Patentansprüche

1. Flammverzögerndes thermoplastisches Polyamidpolymer, dadurch gekennzeichnet, daß das Polyamidpolymer kombiniert ist mit 5 bis 25 Teilen pro hundert Teile eines oder mehrerer Tris-(3-hydroxyalkyl)-phosphinoxide der Formel:

$$(\mathrm{HO\overset{R_1}{\overset{|}{C}}H\overset{R_2}{\overset{|}{C}}H\overset{R_3}{\overset{|}{C}}H})_n\quad\overset{O}{\overset{\|}{P}}\quad(CH_2CH_2CH_2OH)_{3-n}$$

worin $R_1$, $R_2$ und $R_3$ beliebige Reste sind, ausgewählt aus der Gruppe, bestehend aus Wasserstoff, Phenyl und Alkylresten mit 1 bis 4 Kohlenstoffatomen, und n 1, 2 oder 3 sein kann.

2. Flammverzögerndes Polymer nach Anspruch 1, worin das Phosphinoxid ausgewählt ist unter Tris-(3-hydroxypropyl)-phosphinoxid, Tris-(2-methyl-3-hydroxypropyl)-phosphinoxid, 3-Hydroxypropyl-bis-(2-methyl-3-hydroxypropyl)-phosphinoxid, 2-Methyl-3-hydroxypropyl-bis-(3-hydroxypropyl)-phosphinoxid, einem Gemisch von 3-Hydroxypropyl-bis-(2-methyl-3-hydroxypropyl)-phosphinoxid und Bis-(3-hydroxypropyl)-2-methyl-3-hydroxypropylphosphinoxid, Tris-(1-methyl-3-hydroxypropyl)-phosphinoxid, Tris-(1phenyl-3-hydroxypropyl)-phosphinoxid, 3-Hydroxypropyl-bis-(1-methyl-3-hydroxypropyl)-phosphinoxid, 1-Methyl-3-hydroxypropyl-bis-(3-hydroxypropyl)-phosphinoxid und einem Gemisch von 3-Hydroxypropyl-bis-(1-methyl-3-hydroxypropyl)-phosphinoxid und Bis-(3-hydroxypropyl)-1-methyl-3-hydroxypropylphosphinoxid.

3. Flammverzögerndes Polymer nach Anspruch 1 oder 2, worin das thermoplastische Polyamid Nylon 66 oder Nylon 6 ist.

4. Flammverzögerndes Polymer nach Anspruch 1, dem 14 bis 21 Teile pro Hundert des Phosphinoxids zugesetzt worden sind.

5. Verfahren zur Herstellung des flammvorzögernden Polyamidpolymers der Ansprüche 1 bis 4, umfassend den Zusatz des Phosphinoxids zu dem Polymer und seine Verteilung darin.